(19) **Europäisches Patentamt / European Patent Office / Office européen des brevets**

(11) **EP 3 598 273 A1**

(12) **EUROPEAN PATENT APPLICATION**

(43) Date of publication:
**22.01.2020 Bulletin 2020/04**

(51) Int Cl.:
**G06F 3/01** (2006.01)     **H04M 1/725** (2006.01)

(21) Application number: **19184327.5**

(22) Date of filing: **04.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.07.2018   US 201816037648**

(71) Applicant: **Immersion Corporation**
**San Jose, CA 95134 (US)**

(72) Inventor: **SWINDELLS, Colin**
**Palo Alto, CA California 94303 (US)**

(74) Representative: **Hofstetter, Schurack & Partner**
**Patent- und Rechtsanwaltskanzlei**
**PartG mbB**
**Balanstrasse 57**
**81541 München (DE)**

(54) **ADAPTIVE HAPTIC EFFECT RENDERING BASED ON DYNAMIC SYSTEM IDENTIFICATION**

(57)     Systems and methods are provided for generating haptic effects adapted to a dynamic system associated with a user's dynamic interaction with a haptic enabled apparatus. The systems and methods operate to monitor a dynamic change in the dynamic system and automatically modify haptic rendering in real time so that the user can feel consistent haptic effects adapted to the change in the dynamic system.

**FIG. 1**

**Description**

BACKGROUND

Haptics is a tactile and force feedback technology that takes advantage of a user's senses by haptic effects such as vibrations, motions, and other forces and stimulations. Devices, such as mobile devices, gaming devices, touchscreen devices, and personal computers, can be configured to generate haptic effects. Haptic feedback can provide kinesthetic feedback (such as active and resistive force feedback) and/or tactile feedback (such as vibration, vibrotactile feedback, texture, heat, etc.) to a user. Haptic effects may be useful to alert the user to specific events or to provide realistic feedback to create greater sensory immersion within a simulated or virtual environment

While a haptic enabled device can render consistent haptic effects, such intended haptic effects may be perceived differently by different users. They also may be perceived differently by the same user, depending on factors such as how the user interacts with the haptic enabled device, and/or various physical properties of the users, the haptic enabled device, and/or the environment surrounding thereof. It may be desirable to enable the user to feel haptic effects as consistent and more similar to the intended sensation of such haptic effects.

SUMMARY

The present disclosure generally relates to adaptive haptic effect rendering based on identification of a dynamic system. Various aspects are described in this disclosure, which include, but are not limited to, the following aspects.

One aspect is a method for generating a haptic effect. The method includes receiving, in real time, a dynamic system parameter signal from an input device of a haptic enabled apparatus, the dynamic system parameter signal representative of one or more dynamic system parameters of a dynamic system; determining a haptic parameter modification value based on the dynamic system parameter signal; modifying at least one of haptic data parameters based on the haptic parameter modification value; generating a modified haptic signal based on the haptic data parameters; and applying the modified haptic signal to a haptic actuator, thereby providing a haptic effect adapted to the dynamic system.

Another aspect is an apparatus for generating haptic effects. The apparatus includes an actuator, an actuator drive circuit configured to operate the actuator, an input device configured to monitor a dynamic system, and a processing device connected to the actuator drive circuit and the input device. The processing device operates to receive, in real time, a dynamic system parameter signal from the input device, the dynamic system parameter signal representative of one or more dynamic system parameters of the dynamic system; determine a haptic parameter modification value based on the dynamic system parameter signal; modify at least one of haptic data parameters based on the haptic parameter modification value; generate a modified haptic signal based on the haptic data parameters; and transmit the modified haptic signal to the actuator drive circuit, the modified haptic signal enabling the actuator drive circuit to control the actuator, thereby providing a haptic effect adapted to the dynamic system.

Yet another aspect is a computer-readable storage medium comprising software instructions that, when executed, cause a haptic enabled apparatus to, while the haptic enabled apparatus is in use, receive a dynamic system parameter signal from an input device of the haptic enabled apparatus, the dynamic system parameter signal representative of one or more dynamic system parameters of a dynamic system; determine a haptic parameter modification value based on the dynamic system parameter signal; modify at least one of haptic data parameters based on the haptic parameter modification value; generate a modified haptic signal based on the haptic data parameters; and operate a haptic actuator using the modified haptic signal, thereby providing a haptic effect adapted to the dynamic system.

Yet another aspect is a method for generating a haptic effect. The method includes: generating a dynamic system characterization model representative of a dynamic system, the dynamic system indicative of inputs received through an input device of a haptic enabled apparatus; receiving, in real time, an input device signal from the input device, the input device signal representative of dynamic system parameters of the dynamic system; updating the dynamic system characterization model based on the input device signal; modifying a haptic effect rendering model based on the updated dynamic system characterization model; generating a haptic signal based on the modified haptic effect rendering model; and controlling a haptic actuator using the haptic signal, thereby providing a haptic effect adapted to the dynamic system. In certain examples, the method may further include: storing the dynamic system parameters in the haptic enabled apparatus.

Yet another aspect is an apparatus for generating haptic effects. The apparatus includes an actuator, an actuator drive circuit configured to operate the actuator, an input device configured to monitor a dynamic system, and a processing device connected to the actuator drive circuit and the input device. The processing device is configured to generate a dynamic system characterization model representative of the dynamic system; receive, in real time, an input device signal from the input device, the input device signal representative of dynamic system parameters of the dynamic system; update the dynamic system characterization model based on the input device signal; modify a haptic effect rendering model based on the updated dynamic system characterization model; generate a haptic effect signal based on the modified haptic effect rendering model; and transmit the haptic effect signal to the actuator drive circuit, the haptic effect signal enabling the actuator drive circuit to control the actuator, thereby providing a haptic effect adapted to the dynamic system. In certain examples, the processing device may be further configured to store the dynamic system parameters in the haptic enabled apparatus.

Yet another aspect is a computer-readable storage medium comprising software instructions that, when executed, cause a haptic enabled apparatus to: store a dynamic system characterization model representative of a dynamic system; store a haptic effect rendering model; while the haptic enabled apparatus is in use, receive a input device signal from an input device associated with the haptic enabled apparatus, the input device signal representative of dynamic system parameters of the dynamic system; update the dynamic system characterization model based on the input device signal; store the updated dynamic system characterization model; modify the haptic effect rendering model based on the updated dynamic system characterization model; generate a haptic effect signal based on the modified haptic effect rendering model; and operate a haptic actuator using the haptic effect signal, thereby providing a haptic effect adapted to the dynamic system.

In certain examples, the dynamic system parameters include object parameters representative of physical characteristics of the haptic enabled apparatus. The object parameters may include position, velocity and acceleration effects associated with the haptic enabled apparatus.

In certain examples, the dynamic system parameters include user parameters associated with a user's behavioral and physiological properties with respect to the haptic enabled apparatus. The user parameters may include a user grip strength, a user grip pattern, and a user skin sensitivity with respect to the haptic enabled apparatus.

In certain examples, the dynamic system parameters include environmental parameters representative of physical characteristics of an environment surrounding the haptic enabled apparatus.

BRIEF DESCRIPTION OF THE DRAWINGS

FIG. 1 illustrates a haptic enabled system in accordance with an exemplary embodiment of the present disclosure.
FIG. 2 illustrates a block diagram of one of many possible embodiments of a haptic enabled apparatus as illustrated in FIG. 1.
FIG. 3 is a flowchart of an example method for generating adaptive haptic effects.
FIG. 4 is a block diagram that illustrates an example dynamic system characterization model.
FIG. 5 is a block diagram that illustrates an example haptic effect rendering model.
FIG. 6 illustrates a non-limiting example application of generating adaptive haptic effects in two example situations.
FIG. 7 illustrates another non-limiting example application of generating adaptive haptic effects in two example situations.
FIG. 8 illustrates yet another non-limiting example application of generating adaptive haptic effects in three example situations.
FIG. 9 illustrates an example of the dynamic system characterization model in a decision tree format.
FIG. 10 illustrates an example of the dynamic system characterization model in a lookup table format.

DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

Whenever appropriate, terms used in the singular also will include the plural and vice versa. The use of "a" herein means "one or more" unless stated otherwise or where the use of "one or more" is clearly inappropriate. The use of "or" means "and/or" unless stated otherwise. Terms such as "comprise," "comprises," "comprising," "include," "includes," "including," "such as," "has," and "having" are interchangeable and not intended to be limiting. For example, the term "including" shall mean "including, but not limited to."

In general, the present disclosure relates to systems and methods for generating haptic effects adapted to a dynamic system. In certain examples, the dynamic system includes various properties associated with a user's dynamic interaction with a haptic enabled apparatus. The dynamic system may further include a dynamic change in an environment surrounding the haptic enabled apparatus and the user thereof.

A user's perception of haptic rendering for a particular haptic enabled apparatus can change as the dynamic system constantly varies. By way of example, if a user tightens the grip on a smartphone, the effective mass and other dynamic properties of the dynamic system including at least the user's hand and the smartphone can change the user's feel of the haptic effect generated from the smartphone. The systems and methods of the present disclosure operates to monitor a dynamic change in the dynamic system and automatically modify haptic rendering in real time so that the user can feel consistent haptic effects even though the factors that affect the haptic effect may change. The haptic signal controls the haptic effect adapted to change in the dynamic system. As such, the haptic rendering is dynamically updated in response to a status of the dynamic system.

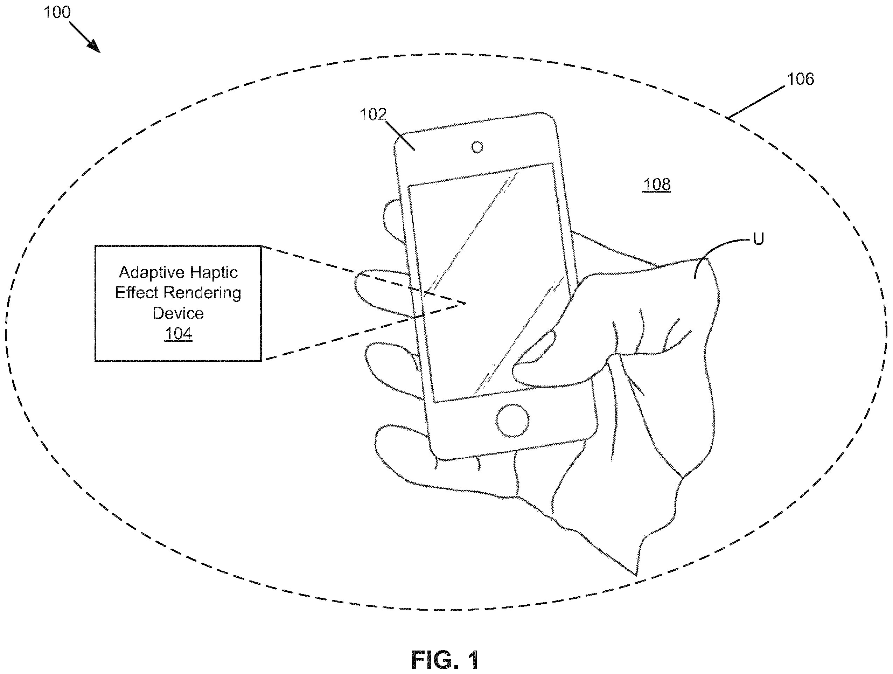

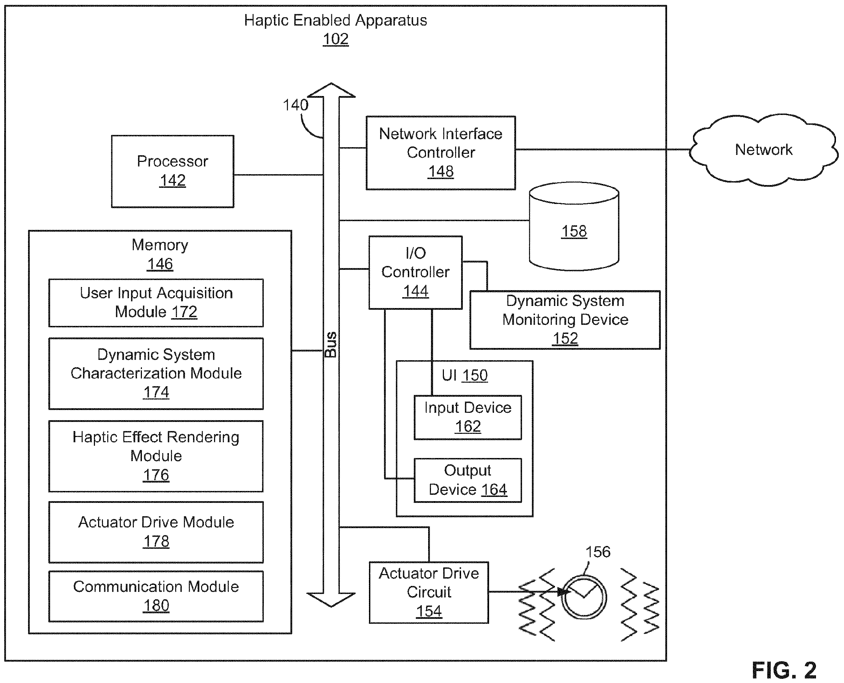

FIG. 1 illustrates a haptic enabled system 100 in accordance with an exemplary embodiment of the present disclosure. The system 100 includes a haptic enabled apparatus 102. The haptic enabled apparatus 102 operates to generate haptic effects. An example of the haptic enabled apparatus 102 is further described in more detail herein, including the description with reference to FIG. 2.

The haptic enabled apparatus 102 includes an adaptive haptic effect rendering device 104. The adaptive haptic effect rendering device 104 operates to monitor a dynamic system 106 and generate a haptic effect which is dynamically adapted to a change in the dynamic system 106, thereby providing a consistent, effective haptic effect to the user's perception.

In at least some embodiments, the dynamic system 106 indicates one or more inputs received through an input device of the haptic enabled apparatus 102, such as an input device 162 and/or a dynamic system monitoring device 152 illustrated in FIG. 2. Such inputs can include signals which are generated from the input device of the haptic enabled apparatus 102 and define a user's dynamic interaction with the haptic enabled apparatus 102. In addition or alternatively, the inputs from the input device of the haptic enabled apparatus 102 can define the status of an environment 108 which surrounds the haptic enabled apparatus 102 and a user U who interacts with the apparatus 102 in real time. In addition or alternatively, the inputs from the input device of the haptic enabled apparatus 102 can define the user's sensation (also referred to herein as feel or perception) of the haptic rendering when interacting with the apparatus, and/or the user's behavior and/or physiological conditions that may or may not be associated with the haptic enabled apparatus 102.

The dynamic system 106 changes as physical properties of the haptic enabled apparatus 102, the user's interaction with the apparatus 102, and/or the environment of the apparatus 102 vary. As a result, a resonant frequency of the apparatus 102 may also change because of, for example, the user or other surrounding elements that are in contact with, or arranged adjacent to, the apparatus 102. In some embodiments, the changed resonant frequency can determine a method of adjusting an operation of a haptic actuator (e.g., how to change a frequency of a haptic data) to provide haptic rendering adapted to the change in the dynamic system.

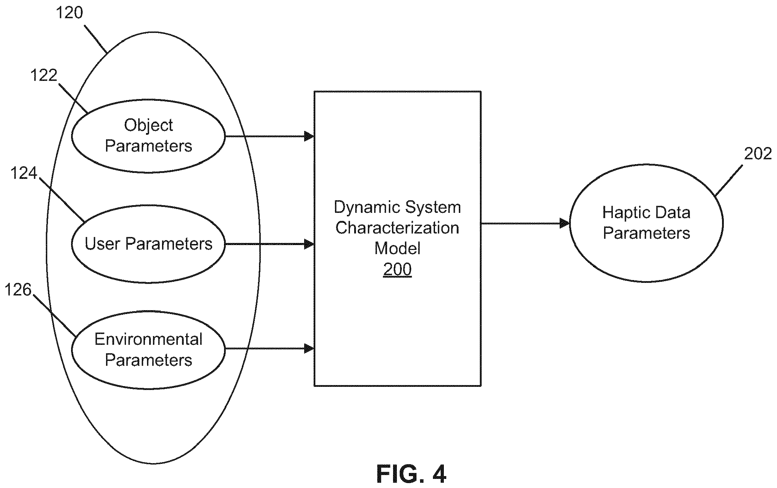

The dynamic system 106 may be represented with a plurality of dynamic system parameters 120, as illustrated in FIG. 4. As described herein, at least one of the dynamic system parameters 120 is updated as the dynamic system 106 changes, and such update or change in the dynamic system parameters 120 are detected in real time. In at least some embodiments, as illustrated in FIG. 4, the dynamic system parameters 120 include object parameters 122, user parameters 124, and environmental parameters 126. In other embodiments, the dynamic system parameters 120 may include less than the object parameters 122, the user parameters 124, and the environmental parameters 126. In yet other embodiments, the dynamic system parameters 120 may include additional parameters.

The object parameters 122 include parameters representative of physical characteristics of the haptic enabled apparatus 102. Such physical characteristics of the haptic enabled apparatus 102 can influence the user's sensation of a haptic effect generated from the haptic enabled apparatus 102. In some embodiments, the haptic enabled apparatus 102 includes one or more devices (e.g., attachment devices) attached or coupled to the apparatus 102, such as a head-mounted display, a controller, or a screen. Therefore, the object parameters 122 also can indicate physical characteristics of the haptic enabled apparatus 102 and other devices associated with the apparatus 102. For example, any device, such as a controller or a screen, coupled to the haptic enabled apparatus 102 can determine the object parameters 122.

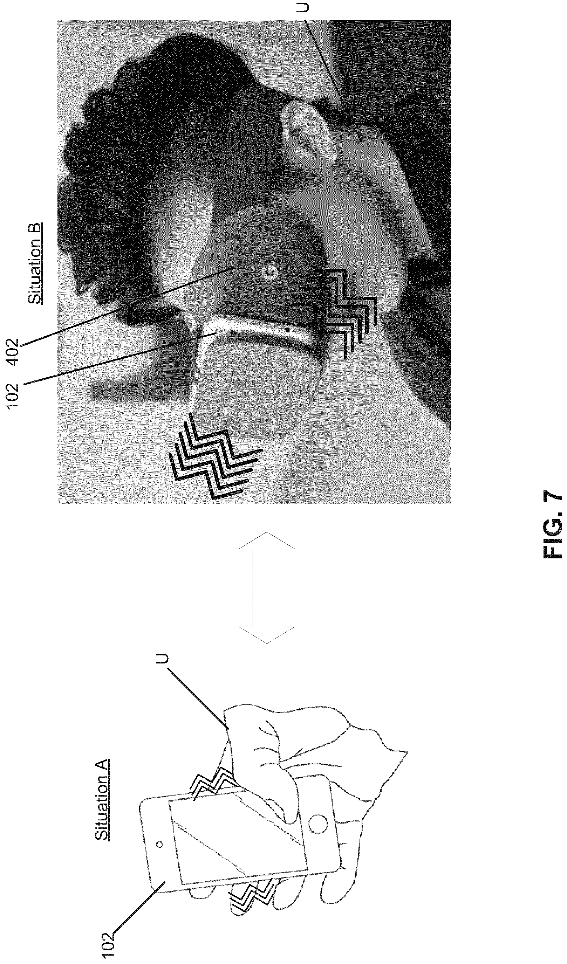

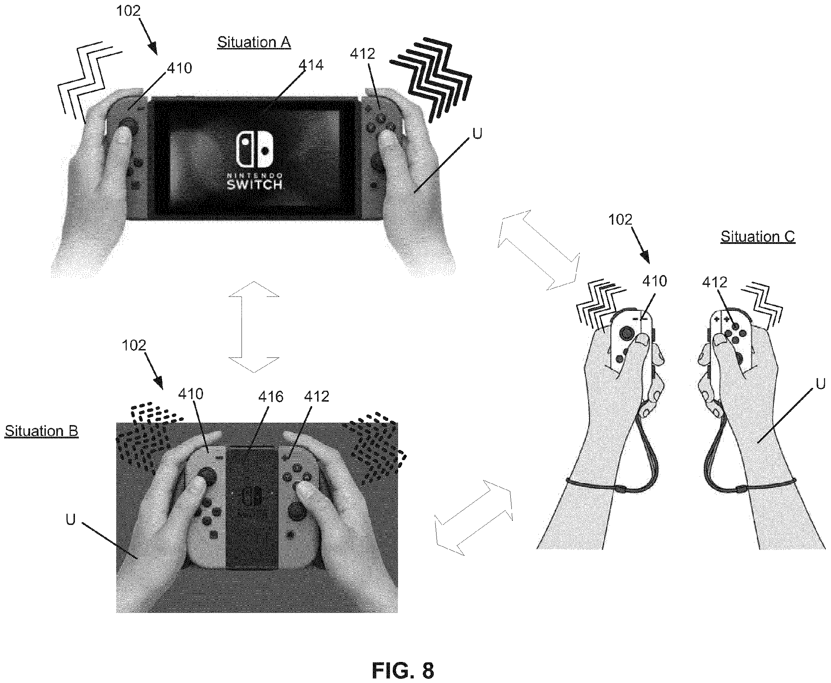

In at least some embodiments, the object parameters 122 include position, velocity, and acceleration of the haptic enabled apparatus 102. Further, the object parameters 122 include stiffness, damping, effective mass, acceleration, friction, or any other physical properties associated with the haptic enabled apparatus 102. In some embodiments, the position, velocity, and acceleration effects are associated with stiffness, damping, and inertia. In addition or alternatively, the object parameters 122 include a location, an arrangement, an orientation, and any other positional information associated with the haptic enabled apparatus 102. By way of example, the user may feel a haptic effect generated from the haptic enabled apparatus 102 differently depending on where the haptic enabled apparatus 102 is placed, such as when the apparatus 102 is laid on a table or when the apparatus 102 is placed in a plastic case. In addition or alternatively, the object parameters 122 include a shape or any other structural properties of the haptic enabled apparatus 102. In addition or alternatively, the object parameters 122 include product specifications of the haptic enabled apparatus 102 (including any auxiliary devices attachable to the apparatus 102, such as a head-mounted display or a controller as illustrated in FIGS. 7 and 8).

The user parameters 124 include parameters associated with the user's behavior with respect to the haptic enabled apparatus 102, and/or the user's physiological properties in contact with the haptic enabled apparatus 102. Similar to the object parameters 122, the user parameters 124 can influence the user's sensation of a haptic effect generated from the haptic enabled apparatus 102. For example, the user parameters 124 can indicate physical properties of the user's body in contact with the haptic enabled apparatus 102. In at least some embodiments, the user parameters 124 include a user's grip strength or force with respect to the apparatus 102, a user's grip pattern with respect to the apparatus 102 (e.g., holding with one hand or two hands), a user's skin sensitivity, a hand size, a finger size, a user's height, a user's posture (e.g., the user's sitting or standing while using the apparatus 102), a user's movement (e.g., the user's walking or running while using the apparatus 102), presence of a glove in hand, or any other user related properties which may influence the user's perception of haptic rendering.

In at least some embodiments, the user parameters 124 can further include the user's medical information, such as age, disability, illness, or any other information that may affect the user's feeling of haptic rendering.

The environmental parameters 126 include parameters associated with the environment 108 that surrounds the apparatus 102 and/or the user U using the apparatus 102. The environmental parameters 126 can influence the user's sensation of a haptic effect generated from the haptic enabled apparatus 102. Examples of environmental parameters 126 include weather information (e.g., temperature, humidity, precipitation, cloud cover, etc.), darkness (e.g., amount of light), loudness, geographic information (e.g., elevation and altitude), atmospheric pressure, or any other environmental factors that may affect the user's sensation of haptic rendering.

FIG. 2 illustrates a block diagram of one of many possible embodiments of a haptic enabled apparatus 102 as illustrated in FIG. 1. The haptic enabled apparatus 102 can be of various configurations. The haptic enabled apparatus 102 can be any type of device that can be used to deliver haptic effects, such as a cellular phone, a smart phone, a personal digital assistant (PDA), a portable music player, a portable video player, a game system, a virtual reality (VR) system, a virtual reality headset, a 360-degree video headset, an automotive system, a navigation system, a desktop, a laptop computer, electronic appliances (e.g., a television, an oven, a washer, a dryer, a refrigerator, or a lighting system), a movie theater such as IMAX™ theater with seats, headsets, or other devices having haptic actuators, and any other electronic or computing devices capable of processing information as well as providing haptic feedback.

In some embodiments, the haptic enabled apparatus 102 can be a single device. In other embodiments, the haptic enabled apparatus 102 can collectively be a set of devices connected together.

In this embodiment, the haptic enabled apparatus 102 includes a bus 140, a processor 142, an input/output (I/O) controller 144, memory 146, a network interface controller (NIC) 148, a user interface 150, a dynamic system monitoring device 152, an actuator drive circuit 154, a haptic actuator 156, and a dynamic system characterization database 158.

In some embodiments, the elements, devices, and components of the apparatus 102, as illustrated in FIG. 2, are incorporated into a single device, which can be worn or carried by a user. In other embodiments, at least one of the illustrated elements, devices, and components is separately arranged from the others and connected to each other either wirelessly or by wire.

The bus 140 includes conductors or transmission lines for providing a path to transfer data between the components in the apparatus 102 including the processor 142, the I/O controller 144, the memory 146, the NIC 148, the dynamic system monitoring device 152, and the actuator drive circuit 154. The bus 140 typically comprises a control bus, address bus, and data bus. However, the bus 140 can be any bus or combination of busses, suitable to transfer data between components in the apparatus 102.

The processor 142 can be any circuit configured to process information and can include any suitable analog or digital circuit. The processor 142 also can include a programmable circuit that executes instructions. Examples of programmable circuits include microprocessors, microcontrollers, application specific integrated circuits (ASIC), programmable gate arrays (PLA), field programmable gate arrays (FPGA), or any other processor or hardware suitable for executing instructions. In various embodiments, the processor 142 can be a single unit or a combination of two or more units. If the processor 142 includes two or more units, the units can be physically located in a single controller or in separate devices.

The processor 142 may be the same processor that operates the entire apparatus 102, or may be a separate processor. The processor 142 can decide what haptic effects are to be played and the order in which the effects are played based on high level parameters. In general, the high level parameters that define a particular haptic effect include magnitude, frequency and duration. Low level parameters such as streaming motor commands could also be used to determine a particular haptic effect.

The processor 142 receives signals or data from the input device 162 and outputs control signals to drive the actuator drive circuit 154. Data received by the processor 142 can be any type of parameters, instructions, flags, or other information that is processed by the processors, program modules, and other hardware disclosed herein.

The I/O controller 144 is circuitry that monitors operation of the apparatus 102 and peripheral or external devices such as the user interface 150. The I/O controller 144 also manages data flow between the apparatus 102 and the peripheral devices and frees the processor 142 from details associated with monitoring and controlling the peripheral devices. Examples of other peripheral or external devices with which the I/O controller 144 can interface includes external storage devices, monitors, input devices such as controllers, keyboards and pointing devices, external computing devices, antennas, other articles worn by a person, and any other remote devices.

The memory 146 can be any type of storage device or computer-readable medium such as random access memory (RAM), read only memory (ROM), electrically erasable programmable read only memory (EEPROM), flash memory, magnetic memory, optical memory, or any other suitable memory technology. The memory 146 also can include a combination of volatile and nonvolatile memory. The memory 146 stores instructions executed by the processor 142. The memory 146 may also be located internal to the processor 142, or any combination of internal and external memory.

The network interface controller (NIC) 148 is in electrical communication with a network to provide communication (either wireless or wired) between the apparatus 102 and remote devices. Communication can be according to any wireless transmission techniques including standards such as Bluetooth, cellular standards (e.g., CDMA, GPRS, GSM, 2.5G, 3G, 3.5G, 4G), WiGig, IEEE 802.11a/b/g/n/ac, IEEE 802.16 (e.g., WiMax). The NIC 148 also can provide wired communication between the apparatus 102 and remote devices through wired connections using any suitable port and connector for transmitting data and according to any suitable standards such as RS 232, USB, FireWire, Ethernet, MIDI, eSATA, or thunderbolt.

The user interface 150 can include an input device 162 and an output device 164. The input device 162 includes any device or mechanism through which a user can input parameters, commands, and other information into the apparatus 102. In at least some embodiments, the input device 162 is configured to monitor or detect one or more events associated with the haptic enabled apparatus 102 or a user of the haptic enabled apparatus 102, or one or more events performed by the user, of which the user can be informed with a haptic feedback. The input device 162 is any device that inputs a signal into the processor 142.

Examples of the input device 162 include touchscreens, touch sensitive surfaces, cameras, mechanical inputs such as buttons and switches, and other types of input components, such as a mouse, touchpad, mini-joystick, scroll wheel, trackball, game pads or game controllers. Other examples of the input device 162 include a control device such as a key, button, switch or other type of user interfaces. Yet other examples of the input device 162 include a transducer that inputs a signal into the processor 142. Examples of transducers that can be used as the input device 162 include one or more antennas and sensors. For example, the input device 162 includes the dynamic system monitoring device 152 as described herein. In other examples, the dynamic system monitoring device 152 includes the input device 162. Yet other examples of the input device 162 include removable memory readers for portable memory, such as flash memory, magnetic memory, optical memory, or any other suitable memory technology.

The output device 164 includes any device or mechanism that presents information to a user in various formats, such as visual and audible formats. Examples of output device 164 include display screens, speakers, lights, and other types of output components. The output device 164 can also include removable memory readers. In one embodiment, the input device 162 and the output device 164 are integrally formed, such as a touch-sensitive display screen.

With reference still to FIG. 2, the dynamic system monitoring device 152 operates to monitor characteristics of the dynamic system 106. In at least some embodiments, the dynamic system monitoring device 152 detects the dynamic system parameters 120 in real time when the apparatus 102 is in use or manipulated by a user U.

The dynamic system monitoring device 152 includes one or more sensors of various types, which may be incorporated in the apparatus 102 or connected to the apparatus 102. In some embodiments, the dynamic system monitoring device 152 can include the input device 162 of the apparatus 102. The dynamic system monitoring device 152 can also be referred to as the input device. Sensors can be any instruments or other devices that output signals in response to receiving stimuli. The sensors can be hardwired to the processor or can be connected to the processor wirelessly. The sensors can be used to detect or sense a variety of different conditions, events, environmental conditions, the operation or condition of the apparatus 102, the presence of other people or objects, or any other condition or thing capable of stimulating sensors.

Examples of sensors include acoustical or sound sensors such as microphones; vibration sensors; chemical and particle sensors such as breathalyzers, carbon monoxide and carbon dioxide sensors, and Geiger counters; electrical and magnetic sensors such as voltage detectors or hall-effect sensors; flow sensors; navigational sensors or instruments such as GPS receivers, altimeters, gyroscopes, magnetometers or accelerometers; position, proximity, and movement-related sensors such as piezoelectric materials, rangefinders, odometers, speedometers, shock detectors; imaging and other optical sensors such as charge-coupled devices (CCD), CMOS sensors, infrared sensors, and photodetectors; pressure sensors such as barometers, piezometers, and tactile sensors; force sensors such as piezoelectric sensors and strain gauges; temperature and heat sensors such as thermometers, calorimeters, thermistors, thermocouples, and pyrometers; proximity and presence sensors such as motion detectors, triangulation sensors, radars, photo cells, sonars, and hall-effect sensors; biochips; biometric sensors such as blood pressure sensors, pulse/ox sensors, blood glucose sensors, and heart monitors. Additionally, sensors can be formed with smart materials, such as piezoelectric polymers, which in some embodiments function as both a sensor and an actuator.

Various embodiments can include a single sensor or can include two or more sensors of the same or different types. Additionally, various embodiments can include different types of sensors.

The actuator drive circuit 154 is a circuit that receives a haptic signal (which is also referred to herein as a control signal) from the actuator drive module 178. The haptic signal embodies haptic data associated with haptic effects, and the haptic data defines parameters the actuator drive circuit 154 uses to generate an actuator drive signal. In exemplary embodiments, such parameters relate to, or are associated with, electrical characteristics. Examples of electrical characteristics that can be defined by the haptic data includes frequency, amplitude, phase, inversion, duration, waveform, attack time, rise time, fade time, and lag or lead time relative to an event. The actuator drive signal is applied to the actuator 156 to cause one or more haptic effects.

The actuator 156, which also is referred to herein as a haptic actuator or a haptic output device, operates to generate haptic effects. The actuator 156 is controlled by the processor 142 that executes the actuator drive module 178, which sends a haptic signal to the actuator drive circuit 154. The actuator drive circuit 154 then generates and applies an actuator drive signal to the actuator 156 to drive the actuator 156. When applied to the actuator 156, an actuator drive signal causes the actuator 156 to generate haptic effects by activating and braking the actuator 156.

The actuator 156 can be of various types. In the illustrated embodiments, the actuator is a resonant actuator, such as a Linear Resonant Actuator (LRA) in which a mass attached to a spring is driven back and forth. In other embodiments, the actuator is a solenoid resonant actuator (SRA).

Other types of electromagnetic actuators are also used, such as an Eccentric Rotating Mass (ERM) in which an eccentric mass is moved by a motor or a "smart material" such as piezoelectric, electro-active polymers or shape memory alloys. Actuators 156 also broadly include non-mechanical or non-vibratory devices such as those that use electrostatic friction (ESF), ultrasonic surface friction (USF), or those that induce acoustic radiation pressure with an ultrasonic haptic transducer, or those that use a haptic substrate and a flexible or deformable surface, or those that provide projected haptic output such as a puff of air using an air jet, and so on.

The apparatus 102 may include more than one actuator 156, and each actuator may include a separate actuator drive circuit 154, all coupled to the processor 142. In embodiments with more than one actuator, each actuator can have a different output capability in order to create a wide range of haptic effects on the device.

The dynamic system characterization database 158 operates to store various data from the dynamic system characterization module 174 and/or the haptic effect rendering module 176. For example, the dynamic system characterization database 158 stores data of characteristics or properties of the dynamic system 106, such as dynamic system characterization model 200 and/or dynamic system parameters 120 (as shown in FIG. 4). The dynamic system characterization database 158 is updated as the dynamic system characterization model 200 is updated. For example, the dynamic system parameters 120 are revised or updated in the database 158 as any change to the dynamic system parameters 120 is detected.

In some embodiments, the dynamic system characterization database 158 is configured as a secondary storage device (such as a hard disk drive, flash memory cards, digital video disks, compact disc read only memories, digital versatile disk read only memories, random access memories, or read only memories) for storing digital data. The secondary storage device is connected to the bus 140. The secondary storage devices and their associated computer readable media provide nonvolatile storage of computer readable instructions (including application programs and program modules), data structures, and other data for the apparatus 102. Although it is illustrated that the secondary storage device for the database 158 is included in the apparatus 102, it is understood that the secondary storage device is a separate device from the apparatus 102 in other embodiments. In yet other embodiments, the database 158 is included in the memory 146.

Referring still to FIG. 2, the memory 146 can store a number of program modules for execution by the processor 142, including a user input acquisition module 172, a dynamic system characterization module 174, a haptic effect rendering module 176, an actuator drive module 178, and a communication module 180. Each module is a collection of data, routines, objects, calls, and other instructions that perform one or more particular task. Although certain modules are disclosed herein, the various instructions and tasks described herein can be performed by a single module, different combinations of modules, modules other than those disclosed herein, or modules executed by remote devices that are in communication, either wirelessly or by wire, with the apparatus 102.

The user input acquisition module 172 are instructions that, when executed by the processor 142, cause the processor 142 to receive user inputs of one or more parameters associated with haptic effects or haptic effect modifiers. The user input acquisition module 172 can communicate with the input device 162 of the user interface 150 and enable a user to input such parameters through the input device 162. By way of example, the user input acquisition module 172 provides a graphical user interface on a display screen (i.e., the input device 162) that allows a user to enter or select one or more parameters for haptic effects.

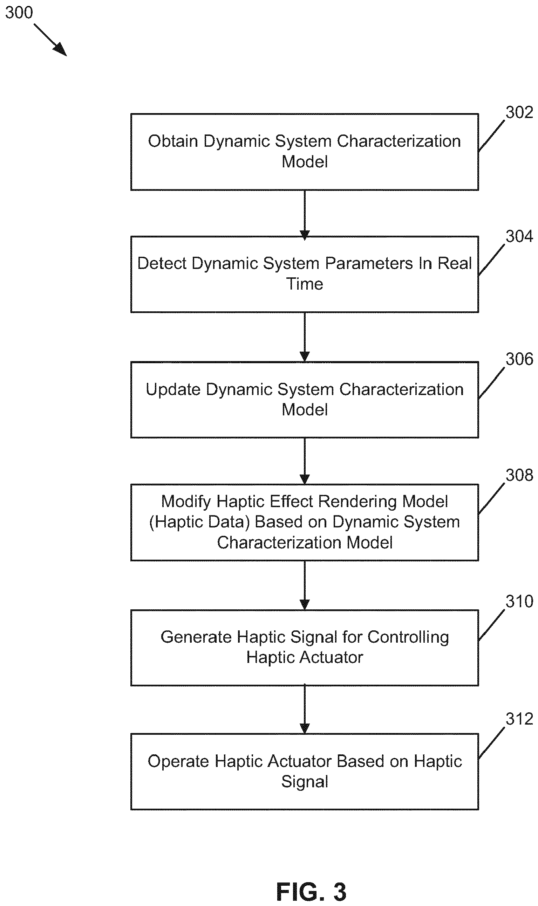

The dynamic system characterization module 174 are instructions that, when executed by the processor 142, cause the processor 142 to receive signals from the dynamic system monitoring device 152 and obtain the dynamic system parameters 120 based on the received signals. The dynamic system characterization module 174 further operates to generate and update a dynamic system characterization model 200 (FIG. 4) based on the dynamic system parameters 120. An example of the dynamic system characterization model 200 is further described and illustrated herein, for example with reference to FIGS. 3 and 4.

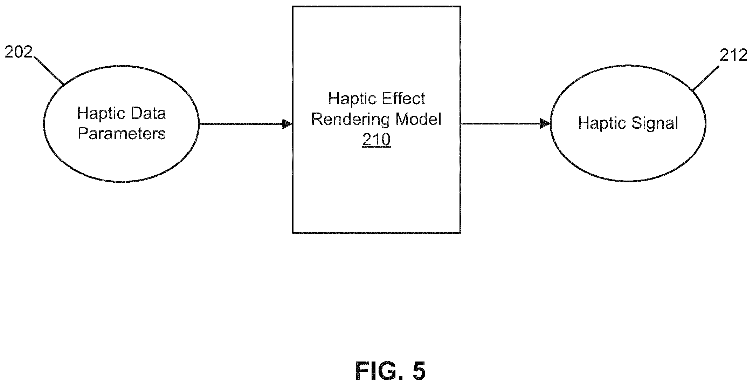

The haptic effect rendering module 176 are instructions that, when executed by the processor 142, cause the processor 142 to render haptic effects on the haptic enabled apparatus 102. In at least some embodiments, the haptic effect rendering module 176 generates a haptic data or haptic effect rendering model 210 (FIG. 5), which defines haptic data parameters 202 (FIGS. 4 and 5) the actuator drive circuit 154 uses to generate an actuator drive signal. In exemplary embodiments, such haptic data parameters 202 relate to, or are associated with, characteristics of the haptic drive signals, such as frequency, amplitude, phase, inversion, duration, waveform, attack time, rise time, fade time, and lag or lead time relative to an event. The actuator drive signal is applied to the actuator 156 to cause one or more haptic effects.

The actuator drive module 178 include instructions that, when executed by the processor 142, cause the processor 142 to generate control signals for the actuator drive circuit 154. The actuator drive module 178 can also determine feedback from the actuator 156 and adjust the control signals accordingly.

The communication module 180 facilitates communication between the apparatus 102 and remote devices. Examples of remote devices include computing devices, sensors, actuators, networking equipment such as routers and hotspots, vehicles, exercise equipment, and smart appliances. Examples of computing devices include servers, desktop computers, laptop computers, tablets, smartphones, home automation computers and controllers, and any other device that is programmable. The communication can take any form suitable for data communication including communication over wireless or wired signal or data paths. In various embodiments, the communication module may configure the apparatus 102 as a centralized controller of the system 100 or other remote devices, as a peer that communicates with other computing devices or other remote devices, or as a hybrid centralized controller and peer such that the controller can operate as a centralized controller in some circumstances and as a peer in other circumstances.

Alternative embodiments of the program modules are possible. For example, some alternative embodiments might have more or fewer program modules than the modules illustrated in FIG. 2. In some possible embodiments, one or more of the program modules are in remote devices such as remote computing devices or other wearable articles.

In some embodiments, the adaptive haptic effect rendering device 104 as illustrated in FIG. 1 may include one or more of the elements, devices, and components of the haptic enabled apparatus 102, as described with reference to FIG. 2. For example, the adaptive haptic effect rendering device 104 can include the processor 142, the memory 146 including at least one of the modules 172, 174, 176, 178, and 180, the dynamic system monitoring device 152, the actuator drive circuit 154, and the actuator 156. In other examples, the adaptive haptic effect rendering device 104 can include more or less elements, devices, and components than illustrated in FIG. 2.

In other embodiments, the adaptive haptic effect rendering device 104 can be configured separately from the haptic enabled apparatus 102. For example, the adaptive haptic effect rendering device 104 is configured as part of a server computing device that communicates with the haptic enabled apparatus 102 via a network.

FIG. 3 is a flowchart of an example method 300 for generating adaptive haptic effects. In at least some embodiments, the haptic enabled apparatus 102 including the adaptive haptic effect rendering device 104 generally preforms the method 300. Therefore, the method 300 is primarily described below as being performed by the haptic enabled apparatus 102. However, in other embodiments, the adaptive haptic effect rendering device 104 is implemented in a separate device from the haptic enabled apparatus 102 and configured to communicate with the apparatus 102 to perform at least some of the steps in the method 300.

At operation 302, the haptic enabled apparatus 102 obtains a dynamic system characterization model 200. In some embodiments, the haptic enabled apparatus 102 operates to generate a dynamic system characterization model 200. In other embodiments, the dynamic system characterization model 200 is generated using a separate computing device (e.g., a server computing device) and provided to the haptic enabled apparatus 102.

The dynamic system characterization model 200 is configured to represent the dynamic system 106. In at least some embodiments, the dynamic system characterization model 200 is built based on the dynamic system parameters 120 and can be configured in the form of a transformation matrix that correlates the dynamic system parameters 120 with the haptic data parameters 202 of the haptic data, as further illustrated in FIG. 4.

In at least some embodiments, the characterization data of the dynamic system 106, which include the dynamic system parameters 120, can be stored in a database, such as the database 158 (FIG. 2), and updated as changes to the dynamic system 106 are detected.

In at least some embodiments, the dynamic system characterization model 200 is configured to render a standard haptic effect representation by default. For example, the dynamic system characterization model 200 is configured such that standard haptic effects are rendered until any change to the dynamic system parameters 120 of the dynamic system 106 is detected and thereby the dynamic system characterization model 200 is updated.

At operation 304, the haptic enabled apparatus 102 operates to detect characteristics of the dynamic system 106. In some embodiments, the haptic enabled apparatus 102 monitors a change to the dynamic system parameters 120 in real time when the haptic enabled apparatus 102 is used or manipulated by a user U. In other embodiments, the haptic enabled apparatus 102 monitors the dynamic system parameters 120 periodically (or at predetermined intervals). In yet other embodiments, the haptic enabled apparatus 102 obtains the dynamic system parameters 120 when a change to the dynamic system parameters 120 is detected. In yet other embodiments, the haptic enabled apparatus 102 detects the dynamic system parameters 120 at random times.

In at least some embodiments, the haptic enabled apparatus 102 operates the dynamic system monitoring device 152 to dynamically monitor the dynamic system parameters 120 of the dynamic system 106. For example, the dynamic system monitoring device 152 operates to detect the dynamic system parameters 120 or a change thereto, and generates a sensor signal (also referred to herein as an input device signal) representative of the dynamic system parameters 120. The haptic enabled apparatus 102 operates to receive the sensor signal from the dynamic system monitoring device 152 and process the sensor signal to obtain the dynamic system parameters 120.

As such, the haptic enabled apparatus 102 actively uses one or more sensors to monitor changes in the dynamic system 106, and, as described below, implements an algorithm to constantly re-characterize the dynamic system 106. As described herein, a few examples of the sensors include accelerometers to parameterize mass, cameras to parameterize stiffness, and force sensors to measure grip strength and biometrics (e.g., to monitor muscle tension).

As described herein, the sensed proprieties (e.g., the dynamic system parameters) of the dynamic system 106 can include physical properties (e.g., mass, friction, and damping parameters), abstract system characteristic properties (e.g., amplitude and controller settings), and user characteristics (e.g., user's grip strength (such as weak grips or tight grips), user's likely sensitivity level to vibrations at different frequencies at different body sites, and user's skin conductance level (e.g., a change in conductive as a user touches a touch screen with a bare finger or a gloved finger).

Regarding the user characteristics, by way of example, if a user's Meissner corpuscles in the user's right hand have been identified or detected to be less sensitive to haptic feedback compared to the user's Pacinian corpuscles in the user's right hand, the dynamic system associated with the user (or the user's right hand) is created and/or modified such that lower frequency vibrotactile effects are amplified than higher frequency vibrotactile effects when the haptic effect is to be generated to the user's right hand. As described herein, such user characteristics can be identified or detected in various manners, such as using sensing devices of the haptic enabled apparatus or using user's medical record.

At operation 306, the haptic enabled apparatus 102 operates to update the dynamic system characterization model 200 based on the detected dynamic system parameters 120. In some embodiments, the dynamic system characterization model 200 can be updated based on the received sensor signal representative of the detected dynamic system parameters 120. The updated dynamic system characterization model 200 is used to transform a standard haptic data (i.e., a standard haptic rendering model), thereby rendering more appropriate haptic effects to the changed dynamic system. A standard haptic data can also be referred to herein as a base haptic data or a universal haptic data.

Where the characterization data of the dynamic system 106 can be stored in the database 158, the database 158 can be updated according to the detected dynamic system parameters 120.

At operation 308, the haptic enabled apparatus 102 operates to modify the haptic effect rendering model 210 (also referred to herein as the haptic data) based on the updated dynamic system characterization model 200. The haptic effect rendering model 210 can define the haptic data parameters 202. Some examples of haptic data parameters 202 relate to, or are associated with, characteristics of the haptic drive signals, such as frequency, amplitude, phase, inversion, duration, waveform, attack time, rise time, fade time, and lag or lead time relative to an event. As described herein and illustrated in FIG. 4, the dynamic system characterization model 200 correlates the characteristics (e.g., the dynamic system parameters 120) of the dynamic system 106 with the haptic data (e.g., the haptic data parameters 202). Therefore, when the dynamic system characterization model 200 is updated with the monitored dynamic system parameters 120, the haptic data parameters 202 are updated correspondingly, and thus the haptic effect rendering model 210 is also modified accordingly. By way of example, a standard haptic data can be modified to increase the amplitude of haptic rendering as a user tightens the grip on the haptic enabled apparatus, so that the user can perceive the haptic rendering as consistent and more similar to the haptic designer's intended sensation or feel.

An example of the haptic effect rendering model 210 is represented as Equation (1) below:

$$\tau = M_{acc}\ddot{\theta} +$$

$$C_{vel-}sgn\dot{\theta}_- + B_{vel-}\dot{\theta}_- + C_{vel+}sgn\dot{\theta}_+ + B_{vel+}\dot{\theta}_+ + A_{pos}\sin(\theta/P_{pos} + S_{pos}) \qquad (1)$$

Where, $\tau$ = Torque applied to the actuator (Units are in mNm, radians, and seconds unless noted otherwise);

$\theta, \dot{\theta}, \ddot{\theta}$ = Position, velocity, and acceleration of the actuator (motor);
$M_{acc}$ = Acceleration value (inertia);
$C_{vel-}, C_{vel+}$ = Negative & positive dynamic friction;
$B_{vel-}, B_{vel+}$ = Negative & positive viscous friction; and
$A_{pos}, P_{pos}, S_{pos}$ = Possible position parameters for amplitude, period, and phase shifts, to render detents;

Additional symbols (Karnopp model);

$\Delta v$ = Zero velocity threshold; and
$D_{vel-}$, $D_{vel+}$ = Negative and positive static friction torques.

In some embodiments, Equation (1) is used for a rotary control, such as a torque control or a radian control. For example, where a vertical dial or knob is associated with a haptic effect as the dial or knob is spun with a finger (e.g., on a touch-sensitive display screen), the haptic effect may be rendered using Equation (1). As described herein, the output of Equation (1) (e.g., a torque value) is used to generate a haptic signal of various characteristics, such as frequency, amplitude, phase, inversion, duration, waveform, attack time, rise time, fade time, and lag or lead time relative to an event. The haptic signal is then applied to the actuator to cause one or more haptic effects.

Another example of the haptic effect rendering model 210 is represented as Equation (2) below, which can be used for a linear force implementation:

$$F = M\ddot{x} + B_{vel-}\dot{x} + B_{vel+}\dot{x} + C_{vel-}\dot{x} + C_{vel+}\dot{x} + kx \qquad (2)$$

Where, F = force (N),

M = mass (kg),
$B_{vel-}$, $B_{vel}$, $C_{vel-}$, $C_{vel+}$, = friction coefficients (N s/m),
k = stiffness (N / m),
$\ddot{x}$ = acceleration,
$\dot{x}$ = velocity, and
x = position.

Similarly, the output of Equation (2) (e.g., a force value) is used to generate a haptic signal of various characteristics, such as frequency, amplitude, phase, inversion, duration, waveform, attack time, rise time, fade time, and lag or lead time relative to an event. The haptic signal is then applied to the actuator to cause one or more haptic effects.

At operation 310, the haptic enabled apparatus 102 operates to generate a haptic signal 212 based on the modified haptic effect rendering model 210. As described herein and further illustrated in FIG. 5, the haptic effect rendering model 210 is used to convert the haptic data parameters 202 to a haptic signal 212 usable to drive the actuator 156.

At operation 312, the haptic enabled apparatus 102 operates to control the haptic actuator 156 using the haptic signal 212. In some embodiments, the haptic signal 212 is provided to the actuator drive circuit 154, which then generates and applies an actuator drive signal to the haptic actuator 156, thereby driving the haptic actuator 156. The haptic actuator 156 is driven by the actuator drive signal to provide a haptic effect adapted to the monitored dynamic system parameters 120 of the dynamic system 106.

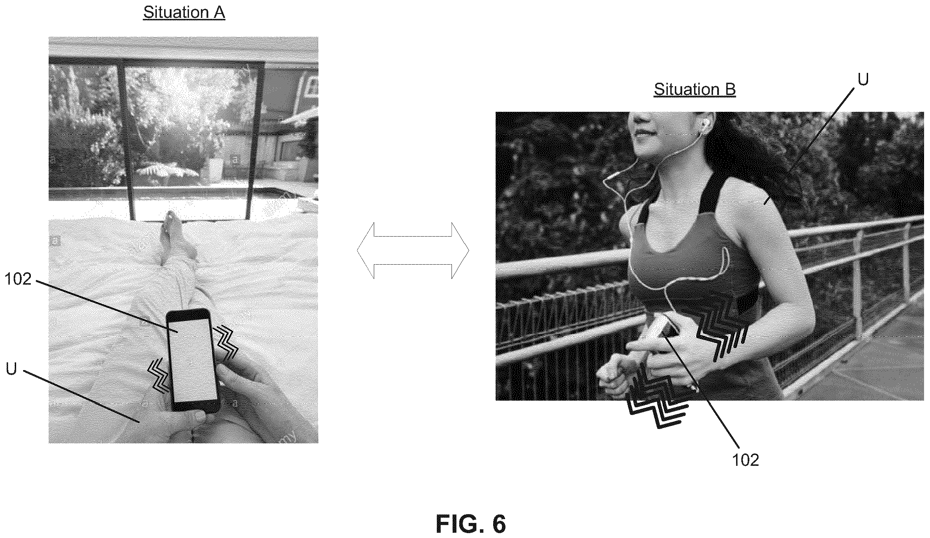

Referring to FIGS. 6-8, non-limiting example implementations of generating adaptive haptic effects are illustrated and described. FIG. 6 illustrates two example situations, such as Situation A and Situation B, where the haptic enabled apparatus 102 generates different haptic effects to a user U who grips the haptic enabled apparatus 102 in different manners. In Situation A (a left diagram of FIG. 6), the user U is holding a haptic enabled apparatus 102 (e.g., a smartphone) that includes a high dynamic range vibrotactile actuator configured to render high definition haptic feedback, such as button click, emoji action, and other haptic effects, as the user sends messages. Because the apparatus 102 is large and the user U typically types and interacts with the apparatus 102 using two thumbs while the apparatus 102 rests on the user's palms and finger tips. The dynamic system monitoring device 152 of the apparatus 102, such as accelerometers, operates to detect the user's very light, resting grips on the apparatus 102 and dynamically updates the haptic renderings to accommodate the user's grip style in this situation.

Later, the user's grip changes to Situation B (a right diagram of FIG. 6) where the user U holds the apparatus 102 tightly in her left hand while jogging. For example, the user U interacts with a music streaming application using only her left hand and thumb, still gripping tightly. The dynamic system monitoring device 152 of the apparatus 102 operates to detect changes to the dynamic system parameters, such as an increased effected mass, stiffness, and damping, which are caused by the user's different grip and manipulation of the apparatus 102. In this example, the dynamic system 106 includes at least the apparatus 102 and the user's hand holding the apparatus 102. As a result, in some examples, the frequency dynamics and the intensity profiles of the haptic renderings of the music streaming application running on the apparatus 102 can be adapted on the apparatus 102 to account for the user's stronger grip.

FIG. 7 illustrates two example situations, such as Situation A and Situation B, where the haptic enabled apparatus 102 generates different haptic effects depending on physical properties surrounding the apparatus 102. In Situation A (a left diagram of FIG. 7), a user U is holding using the apparatus 102 (e.g., a smartphone) with a hand. In Situation B (a right diagram of FIG. 7), the user U has put the apparatus 102 into a head-mounted display (HMD) 402. The apparatus 102 operates to detect that the apparatus 102 is now physically coupled to the HMD 402, instead of the user's hand. The dynamic system monitoring device 152 of the apparatus 102 operates to detect changes to the dynamic system 106, such as the changed physical properties of the apparatus 102 coupled to the HMD 402, such as its total mass and damping associated with the HMD 402 (e.g., a foam padding of the HMD). For examples, sensors in the apparatus 102, as well as look-up tables associated with the physical characteristics of the HMD 402, can be used to automatically perform a system characterization of the physical dynamics of the dynamic system 106 including the HMD 402 mounting the apparatus 102 and the user's head. The dynamic system characterization model 200, which can include a transformation matrix in some examples, can be created and/or updated to account for the changed characteristics of the dynamic system 106 while the user U interacts with the apparatus 102 in the HMD 402. By way of example, the frequency distribution of the vibrotactile acceleration profiles of the haptic renderings for the user's virtual reality games running on the apparatus 102 coupled to the HMD 402 can automatically adjust to optimally render haptic effects adapted to the user U.

FIG. 8 illustrates three example situations, such as Situation A, Situation B, and Situation C, wherein the apparatus 102 generates different haptic effects depending on different modes of operation. In this example, the apparatus 102 includes various components of the Nintendo Switch console, available from Nintendo Co., Ltd. (Kyoto, Japan). In Situation A, a user U is playing with the apparatus 102 in a configuration called "Handheld Mode with Joy-Cons Attached" where controllers 410 and 412 ("Joy-Cons") are attached to opposite sides of a portable display screen 414. In Situation B, the user U changes the configuration of the apparatus 102 to "TV Mode with Joy-Con Grip" where the controllers 410 and 412 are joined together into a grip device 416 ("Joy-Con Grip"). Haptic effects relayed to the controllers 410 and 412 are automatically modified according to the system and method described herein in order to account for the differences in dynamic system parameters, such as stiffness, mass, etc., in different configurations. Now, the user U changes the controller configuration to a pair of separated controllers 410 and 412 ("Individual Joy-Cons") in Situation C. The haptic effects are adapted to the physical change to the controller configuration (e.g., lower mass and stiffness) and the user characteristics (e.g., modified grip strength with more skin surface contact).

In addition, where two users operate the controllers separately, haptic effects can be rendered differently to the users to accommodate their different gripping forces, stiffness, and mass with respect to the controllers. By way of example, when a first user grips the controllers with more force than a second user, and the first user's hands are heavier and less stiff than the second user's, the haptic effects are adapted (e.g., magnitude increased) to accommodate the first user's hands and controller configuration which have been actively monitored and updated as described herein.

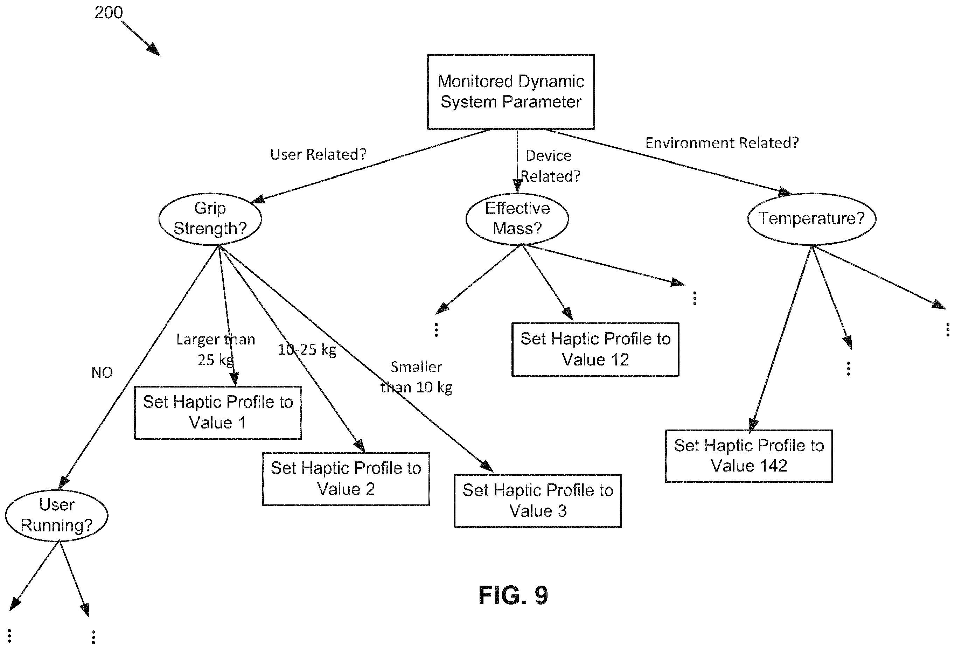

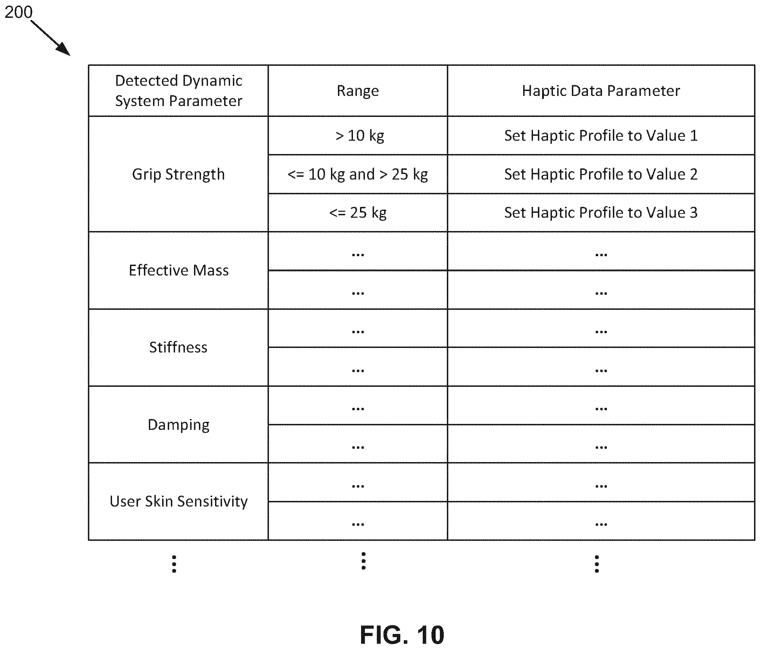

Referring to FIGS. 9 and 10, examples of the dynamic system characterization model 200 are described and illustrated. FIG. 9 illustrates an example of the dynamic system characterization model 200 in a decision tree format, and FIG. 10 illustrates an example of the dynamic system characterization model 200 in a lookup table format. As illustrated, the dynamic system characterization model 200 can have one or more predetermined ranges for each of the dynamic system parameters 120, which determine adjustment of one or more haptic data parameters 202 of the haptic effect rendering model 210.

As in FIG. 9, the decision tree for the dynamic system characterization model 200 includes decision nodes which represent dynamic system parameters 120 and can branch out to a plurality of end nodes for setting up haptic profiles (e.g., Value 1, 2, 3, ...) depending on the ranges for the dynamic system parameters. By way of example, a decision node for a grip strength can categorized into three end nodes depending on the range of the grip strength, and each end node indicates a haptic profile to be set up for the haptic data parameter 202. Similarly, other decision nodes can be used for other dynamic system parameters, such as effective mass and temperature in the illustration of FIG. 9. For the effective mass decision node, the haptic profile being set up can be a mass value or a value related thereto. For the temperature decision node, the haptic profile being set up can be a temperature value or a value related thereto, such as heat flux, temperature, or other thermal related feedback. As described herein, humidity is another environmental condition that may be associated with one or more particular haptic profiles.

As in FIG. 10, the lookup table for the dynamic system characterization model 200 can be used to implement a similar algorithm as illustrated in FIG. 9. For example, the lookup table for the dynamic system characterization model 200 includes columns for dynamic system parameters, ranges, and haptic data parameters. For each dynamic system parameter, different values (e.g., Values 1, 2, 3, ...) are set up for haptic profiles depending on different ranges of the dynamic system parameter.

As described herein, the haptic profile can represent one or more characteristics of the haptic drive signals, such as frequency, amplitude, phase, inversion, duration, waveform, attack time, rise time, fade time, and lag or lead time relative to an event. The haptic profile can be one or a combination of various characteristics of the haptic drive signals, thereby mapping different haptic responses for different system configurations. As described herein, the system configurations can change due to various factors, examples of which include the apparatus 102 being held by a user hand with variable parameters, such as grip strength, effective mass, and temperature.

In one example, the haptic profile being set up can be a haptic amplitude. As described herein, different amplitudes can compensate for different grip strengths. For example, a higher amplitude haptic effect can be rendered to compensate for the reduced vibration intensity that will result a user holding a device tightly. In some embodiments, the unit of amplitude can be a unitless scale from 0 - 1, as a voltage (i.e., driving a haptic actuator) or any other characteristics. In another example, alternatively or in addition, the haptic profile being set up can be a haptic frequency. In some embodiments, the haptic frequency can map to a resonant frequency of the apparatus 102 (which can change in the context of the dynamic system 106; in this sense, a resonant frequency may be also referred to as a resonant frequency of the dynamic system 106). Such mapping of the haptic frequency to the resonant frequency of the apparatus 102 can help conveying a stronger haptic effect.

In some embodiments, the dynamic system characterization model 200 incorporates a machine learning algorithm configured to learn the dynamic system 106 (e.g., a user behavior) with respect to the haptic enabled apparatus 102. For example, such a machine learning algorithm allows anticipating a user behavior interacting with the haptic enabled apparatus 102 and updating the dynamic system characterization model 200 accordingly, thereby providing improved user experience of haptic effects adapted to the anticipated change in the user behavior.

The systems and methods for generating adaptive haptic effects in accordance with the present disclosure can also be applied to kinesthetic and temperature haptic feedback conditions. By way of example, an adjustment in force feedback can be made depending on a monitored stiffness of a user's muscles. If tense muscles are monitored, more force feedback is provided, and if relaxed muscled are monitored, less force feedback is provided. Similarly, a temperature adjustment can be made depending on the temperature of a haptic enabled device or the environment thereof. By way of example, if a warm climate is detected, a higher rendered temperature is generated and provided, and if a cool climate is detected, a lower rendered temperature is generated and provided.

The systems and methods of the present disclosure can be used for physics-based models involving velocity and acceleration based effects such as friction and mass, respectively. The mathematical stability of physics-based models can be sensitive to the accuracy of the dynamic system identification. In some embodiments, a step for calibrating the dynamic system identification can be provided to improve the accuracy.

The invention is further directed to a computer-readable storage medium comprising software instructions according to the following embodiments:

Embodiment 1: A computer-readable storage medium comprising software instructions that, when executed, cause a haptic enabled apparatus to: store a dynamic system characterization model representative of a dynamic system; store a haptic effect rendering model; while the haptic enabled apparatus is in use, receive a input device signal from an input device associated with the haptic enabled apparatus, the input device signal representative of dynamic system parameters of the dynamic system; update the dynamic system characterization model based on the input device signal; store the updated dynamic system characterization model; modify the haptic effect rendering model based on the updated dynamic system characterization model; generate a haptic effect signal based on the modified haptic effect rendering model; and operate a haptic actuator using the haptic effect signal, thereby providing a haptic effect adapted to the dynamic system.

Embodiment 2: The computer-readable storage medium of embodiment 1, wherein the dynamic system parameters include object parameters representative of physical characteristics of the haptic enabled apparatus.

Embodiment 3: The computer-readable storage medium of embodiment 2, wherein the object parameters include position, velocity and acceleration effects associated with the haptic enabled apparatus.

Embodiment 4: The computer-readable storage medium of embodiment 1, wherein the dynamic system parameters include user parameters associated with a user's behavioral and physiological properties with respect to the haptic enabled apparatus.

Embodiment 5: The computer-readable storage medium of embodiment 4, wherein the user parameters include a user grip strength, a user grip pattern, and a user skin sensitivity with respect to the haptic enabled apparatus; and

Embodiment 6: The computer-readable storage medium of embodiment 1, wherein the dynamic system parameters include environmental parameters representative of physical characteristics of an environment surrounding the haptic enabled apparatus.

The various examples and teachings described above are provided by way of illustration only and should not be construed to limit the scope of the present disclosure. Those skilled in the art will readily recognize various modifications and changes that may be made without following the examples and applications illustrated and described herein, and without departing from the true spirit and scope of the present disclosure.

**Claims**

1. A method for generating a haptic effect, the method comprising:

receiving, in real time, a dynamic system parameter signal from an input device of a haptic enabled apparatus, the dynamic system parameter signal representative of one or more dynamic system parameters of a dynamic system;

determining a haptic parameter modification value based on the dynamic system parameter signal;

modifying at least one of haptic data parameters based on the haptic parameter modification value;

generating a modified haptic signal based on the haptic data parameters; and

applying the modified haptic signal to a haptic actuator, thereby providing a haptic effect adapted to the dynamic system.

2. The method of claim 1, wherein the dynamic system parameters include object parameters representative of physical characteristics of the haptic enabled apparatus;

or

wherein the dynamic system parameters include object parameters representative of physical characteristics of the haptic enabled apparatus and the object parameters include position, velocity and acceleration effects associated with the haptic enabled apparatus.

3. The method of claim 1, wherein the dynamic system parameters include user parameters associated with a user's behavioral and physiological properties with respect to the haptic enabled apparatus;

or

wherein the dynamic system parameters include user parameters associated with a user's behavioral and physiological properties with respect to the haptic enabled apparatus and the user parameters include a user grip strength, a user grip pattern, and a user skin sensitivity with respect to the haptic enabled apparatus.

4. The method of claim 1, wherein the dynamic system parameters include environmental parameters representative of physical characteristics of an environment surrounding the haptic enabled apparatus.

5. The method of claim 1, further comprising:

storing the dynamic system parameters in the haptic enabled apparatus.

6. An apparatus for generating haptic effects, the apparatus comprising:

an actuator;

an actuator drive circuit configured to operate the actuator;

an input device configured to monitor a dynamic system; and

a processing device connected to the actuator drive circuit and the input device, the processing device configured to:

receive, in real time, a dynamic system parameter signal from the input device, the dynamic system parameter signal representative of one or more dynamic system parameters of the dynamic system;

determine a haptic parameter modification value based on the dynamic system parameter signal;

modify at least one of haptic data parameters based on the haptic parameter modification value;

generate a modified haptic signal based on the haptic data parameters; and

transmit the modified haptic signal to the actuator drive circuit, the modified haptic signal enabling the actuator drive circuit to control the actuator, thereby providing a haptic effect adapted to the dynamic system.

7. The apparatus of claim 6, wherein the dynamic system parameters include object parameters, user parameters, and environmental parameters, the object parameters representative of physical characteristics of the haptic enabled apparatus and including position, velocity and acceleration effects associated with the haptic enabled apparatus; the user parameters associated with a user's behavioral and physiological properties with respect to the haptic enabled apparatus, the user parameters including a user grip strength, a user grip pattern, and a user skin sensitivity with respect to the haptic enabled apparatus; and the environmental parameters representative of physical characteristics of an environment surrounding the haptic enabled apparatus.

8. A computer-readable storage medium comprising software instructions that, when executed, cause a haptic enabled apparatus to:

while the haptic enabled apparatus is in use, receive a dynamic system parameter signal from an input device of the haptic enabled apparatus, the dynamic system parameter signal representative of one or more dynamic system parameters of a dynamic system;
determine a haptic parameter modification value based on the dynamic system parameter signal;
modify at least one of haptic data parameters based on the haptic parameter modification value;

generate a modified haptic signal based on the haptic data parameters; and
operate a haptic actuator using the modified haptic signal, thereby providing a haptic effect adapted to the dynamic system.

9. A method for generating a haptic effect, the method comprising:

generating a dynamic system characterization model representative of a dynamic system, the dynamic system indicative of inputs received through an input device of a haptic enabled apparatus;
receiving, in real time, an input device signal from the input device, the input device signal representative of dynamic system parameters of the dynamic system;
updating the dynamic system characterization model based on the input device signal;
modifying a haptic effect rendering model based on the updated dynamic system characterization model;
generating a haptic signal based on the modified haptic effect rendering model; and
controlling a haptic actuator using the haptic signal, thereby providing a haptic effect adapted to the dynamic system.

10. The method of claim 9, wherein the dynamic system parameters include object parameters representative of physical characteristics of the haptic enabled apparatus;
or
wherein the dynamic system parameters include object parameters representative of physical characteristics of the haptic enabled apparatus and the object parameters include position, velocity and acceleration effects associated with the haptic enabled apparatus.

11. The method of claim 9, wherein the dynamic system parameters include user parameters associated with a user's behavioral and physiological properties with respect to the haptic enabled apparatus;
or
wherein the dynamic system parameters include user parameters associated with a user's behavioral and physiological properties with respect to the haptic enabled apparatus and the user parameters include a user grip strength, a user grip pattern, and a user skin sensitivity with respect to the haptic enabled apparatus.

12. The method of claim 9, wherein the dynamic system parameters include environmental parameters representative of physical characteristics of an environment surrounding the haptic enabled apparatus.

13. The method of claim 9, further comprising:
storing the dynamic system parameters in the haptic enabled apparatus.

14. An apparatus for generating haptic effects, the apparatus comprising:

an actuator;
an actuator drive circuit configured to operate the actuator;
an input device configured to monitor a dynamic system; and
a processing device connected to the actuator drive circuit and the input device, the processing device configured to:

generate a dynamic system characterization model representative of the dynamic system;
receive, in real time, an input device signal from the input device, the input device signal representative of dynamic system parameters of the dynamic system;
update the dynamic system characterization model based on the input device signal;
modify a haptic effect rendering model based on the updated dynamic system characterization model;
generate a haptic effect signal based on the modified haptic effect rendering model; and
transmit the haptic effect signal to the actuator drive circuit, the haptic effect signal enabling the actuator drive circuit to control the actuator, thereby providing a haptic effect adapted to the dynamic system.

**15.** The apparatus of claim 14, wherein the dynamic system parameters include object parameters representative of physical characteristics of the haptic enabled apparatus;
or
wherein the dynamic system parameters include object parameters representative of physical characteristics of the haptic enabled apparatus and the object parameters include position, velocity and acceleration effects associated with the haptic enabled apparatus.

**16.** The apparatus of claim 14, wherein the dynamic system parameters include user parameters associated with a user's behavioral and physiological properties with respect to the haptic enabled apparatus;
or
wherein the dynamic system parameters include user parameters associated with a user's behavioral and physiological properties with respect to the haptic enabled apparatus and the user parameters include a user grip strength, a user grip pattern, and a user skin sensitivity with respect to the haptic enabled apparatus.

**17.** The apparatus of claim 14, wherein the dynamic system parameters include environmental parameters representative of physical characteristics of an environment surrounding the haptic enabled apparatus.

**18.** The apparatus of claim 14, wherein the processing device is further configured to:
store the dynamic system parameters in the haptic enabled apparatus.

**19.** A computer-readable storage medium with instructions stored thereon that, when executed by a processor, cause the processor to implement a method according to one of claims 9 to 13.

FIG. 1

**Haptic Enabled Apparatus**
**102**

140

Processor
142

Network Interface
Controller
148

Network

158

Memory
146

User Input Acquisition
Module 172

Dynamic System
Characterization Module
174

Haptic Effect Rendering
Module
176

Actuator Drive Module
178

Communication Module
180

Bus

I/O
Controller
144

Dynamic System
Monitoring Device
152

UI 150

Input Device
162

Output
Device 164

Actuator Drive
Circuit
154

156

**FIG. 2**

300

302
Obtain Dynamic System Characterization Model

304
Detect Dynamic System Parameters In Real Time

306
Update Dynamic System Characterization Model

308
Modify Haptic Effect Rendering Model (Haptic Data) Based on Dynamic System Characterization Model

310
Generate Haptic Signal for Controlling Haptic Actuator

312
Operate Haptic Actuator Based on Haptic Signal

**FIG. 3**

FIG. 4

Haptic Data Parameters

202

Haptic Effect Rendering Model 210

Haptic Signal

212

FIG. 5

FIG. 6

Situation A

102

U

Situation B

102  402

U

**FIG. 7**

EP 3 598 273 A1

FIG. 8

FIG. 9

| Detected Dynamic System Parameter | Range | Haptic Data Parameter |
|---|---|---|
| Grip Strength | > 10 kg | Set Haptic Profile to Value 1 |
| | <= 10 kg and > 25 kg | Set Haptic Profile to Value 2 |
| | <= 25 kg | Set Haptic Profile to Value 3 |
| Effective Mass | ... | ... |
| | ... | ... |
| Stiffness | ... | ... |
| | ... | ... |
| Damping | ... | ... |
| | ... | ... |
| User Skin Sensitivity | ... | ... |
| | ... | ... |

**FIG. 10**

EP 3 598 273 A1

Europäisches
Patentamt

European
Patent Office

Office européen
des brevets

# EUROPEAN SEARCH REPORT

Application Number

EP 19 18 4327

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 778 850 A1 (IMMERSION CORP [US]) 17 September 2014 (2014-09-17) * figures 1-4 * * paragraph [0003] * * paragraph [0008] - paragraph [0060] * | 1-19 | INV. G06F3/01 H04M1/725 |
| X | US 2015/035780 A1 (BIRNBAUM DAVID [US] ET AL) 5 February 2015 (2015-02-05) * figures 1-15 * * paragraph [0023] - paragraph [0072] * | 1-19 | |
| X | EP 3 293 621 A2 (IMMERSION CORP [US]) 14 March 2018 (2018-03-14) * figures 1-6E * * paragraph [0010] - paragraph [0055] * | 1-19 | |
| A | WO 98/49614 A1 (IMMERSION HUMAN INTERFACE CORP [US]) 5 November 1998 (1998-11-05) * figures 1-19 * * paragraph [0016] - paragraph [0176] * | 1-19 | |
| A | WO 2018/113952 A1 (ERICSSON TELEFON AB L M [SE]) 28 June 2018 (2018-06-28) * figures 1a-6 * * paragraph [0010] - paragraph [0085] * | 1-19 | TECHNICAL FIELDS SEARCHED (IPC) G06F H04M |

The present search report has been drawn up for all claims

| Place of search | Date of completion of the search | Examiner |
|---|---|---|
| Munich | 18 November 2019 | Roth, Lucia |

EPO FORM 1503 03.82 (P04C01)

## ANNEX TO THE EUROPEAN SEARCH REPORT
## ON EUROPEAN PATENT APPLICATION NO.

EP 19 18 4327

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2019

| Patent document cited in search report | | Publication date | Patent family member(s) | | Publication date |
|---|---|---|---|---|---|
| EP 2778850 | A1 | 17-09-2014 | CN | 104049746 A | 17-09-2014 |
| | | | EP | 2778850 A1 | 17-09-2014 |
| | | | JP | 6482765 B2 | 13-03-2019 |
| | | | JP | 2014209329 A | 06-11-2014 |
| | | | KR | 20140113408 A | 24-09-2014 |
| | | | US | 2014267076 A1 | 18-09-2014 |
| US 2015035780 | A1 | 05-02-2015 | US | 8493354 B1 | 23-07-2013 |
| | | | US | 8866788 B1 | 21-10-2014 |
| | | | US | 2013300683 A1 | 14-11-2013 |
| | | | US | 2014184497 A1 | 03-07-2014 |
| | | | US | 2015035780 A1 | 05-02-2015 |
| | | | US | 2016162032 A1 | 09-06-2016 |
| | | | US | 2017220115 A1 | 03-08-2017 |
| EP 3293621 | A2 | 14-03-2018 | CN | 107807733 A | 16-03-2018 |
| | | | EP | 3293621 A2 | 14-03-2018 |
| | | | JP | 2018041463 A | 15-03-2018 |
| | | | KR | 20180028968 A | 19-03-2018 |
| | | | US | 2018074585 A1 | 15-03-2018 |
| | | | US | 2019146589 A1 | 16-05-2019 |
| WO 9849614 | A1 | 05-11-1998 | CA | 2287349 A1 | 05-11-1998 |
| | | | EP | 1012697 A1 | 28-06-2000 |
| | | | EP | 1988446 A1 | 05-11-2008 |
| | | | US | 6147674 A | 14-11-2000 |
| | | | US | 7039866 B1 | 02-05-2006 |
| | | | WO | 9849614 A1 | 05-11-1998 |
| WO 2018113952 | A1 | 28-06-2018 | CN | 110100222 A | 06-08-2019 |
| | | | EP | 3559780 A1 | 30-10-2019 |
| | | | US | 2019339777 A1 | 07-11-2019 |
| | | | WO | 2018113952 A1 | 28-06-2018 |

EPO FORM P0459

For more details about this annex : see Official Journal of the European Patent Office, No. 12/82